(19) Europäisches Patentamt / European Patent Office / Office européen des brevets

(11) **EP 1 920 234 B1**

## (12) FASCICULE DE BREVET EUROPEEN

(45) Date de publication et mention
de la délivrance du brevet:
**05.11.2008 Bulletin 2008/45**

(51) Int Cl.:
*G01N 21/03* (2006.01)   *G02B 17/00* (2006.01)
*G02B 7/182* (2006.01)

(21) Numéro de dépôt: **06794213.6**

(22) Date de dépôt: **25.07.2006**

(86) Numéro de dépôt international:
**PCT/FR2006/001814**

(87) Numéro de publication internationale:
**WO 2007/017570 (15.02.2007 Gazette 2007/07)**

(54) **SYSTÈME OPTIQUE À RÉFLEXION MULTIPLE**

OPTISCHES SYSTEM MIT MEHRFACHREFLEXION

MULTIPLE REFLECTION OPTICAL SYSTEM

(84) Etats contractants désignés:
**AT BE BG CH CY CZ DE DK EE ES FI FR GB GR
HU IE IS IT LI LT LU LV MC NL PL PT RO SE SI
SK TR**

(30) Priorité: **05.08.2005 FR 0508396**

(43) Date de publication de la demande:
**14.05.2008 Bulletin 2008/20**

(73) Titulaire: **CENTRE NATIONAL DE
LA RECHERCHE SCIENTIFIQUE (CNRS)
75794 Paris Cedex 16 (FR)**

(72) Inventeur: **ROBERT, Claude
F-45000 Orléans (FR)**

(74) Mandataire: **Bredema
38, avenue de l'Opéra
75002 Paris (FR)**

(56) Documents cités:
**EP-A- 0 831 567**        **US-A- 5 440 143**

- **HERRIOTT D R ET AL: "FOLDED OPTICAL DELAY
LINES" APPLIED OPTICS, XX, XX, vol. 4, no. 8,
août 1965 (1965-08), pages 883-890, XP009055272
ISSN: 0003-6935**
- **WHITE J U: "LONG OPTICAL PATHS OF LARGE
APERTURE" JOURNAL OF THE OPTICAL
SOCIETY OF AMERICA, THE SOCIETY,
MENASHA, WI, US, vol. 32, no. 5, mai 1942
(1942-05), pages 285-288, XP001204443 ISSN:
0030-3941**

**Description**

La présente invention se rapporte au domaine de l'optique.

La présente invention se rapporte plus particulièrement au domaine des systèmes optiques à réflexions multiples.

Dans le domaine des mesures optiques par absorption, il est connu d'utiliser une source de lumière d'intensité $I_0$ pour éclairer un matériau à analyser. La propagation dans le matériau absorbant modifie l'intensité selon une loi exponentielle.

Dans le cadre d'une mesure de concentration d'une espèce gazeuse cette loi est du type $I=I_0\exp(-\sigma NL)$, $\sigma$ étant la section efficace d'absorption caractéristique du gaz à analyser, N sa concentration, et L, la longueur du parcours optique.

On comprend donc qu'il est avantageux d'augmenter le parcours optique afin d'améliorer la précision des mesures d'absorption.

Pour ce faire, on peut soit utiliser des sources et des détecteurs à grandes distances, soit utiliser des systèmes optiques de petite taille mais permettant un parcours optique important.

Les systèmes optiques à réflexions multiples correspondent à de tels systèmes.

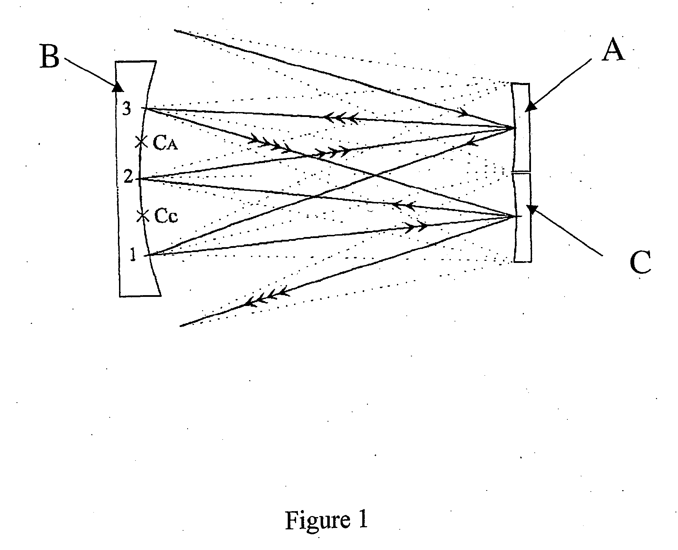

Dans le domaine des systèmes optiques à réflexions multiples, l'art antérieur connaît déjà depuis les années 1940, les cellules de White. Comme illustré figure 1, une cellule de White se compose d'une première face comportant un miroir B, et d'une deuxième face comportant deux miroirs A et C. Les miroirs sont agencés de telle sorte que les rayons de courbure des trois miroirs soient égaux à la distance entre les miroirs, R1=R2=R3=D. En modifiant l'angle entre les deux miroirs juxtaposés A et C, il est possible d'ajuster le nombre d'aller-retour du faisceau lumineux et donc d'ajuster le trajet optique.

Un tel dispositif de White possède cependant l'inconvénient de ne pas utiliser l'ensemble de la surface utile des miroirs puisque tous les rayons passent par les centres des miroirs A et C et sur deux lignes du miroir B. Ceci est une conséquence de la condition contraignante de symétrie R1=R2=R3=D.

Il serait donc avantageux afin d'augmenter le nombre d'aller-retour de la lumière, d'utiliser l'ensemble de la surface des miroirs de la cellule optique.

Dans un autre but, il a déjà été proposé, dans la publication « Optical True time delay for phased array antennas : demonstration of a quadratic White Cell » (Betty Lise Anderson and Craig D. Little), un système comportant une combinaison de deux cellules de White, et un moyen pour faire passer les rayons d'une cellule à l'autre, par exemple de type MEM ou séparateur de faisceau. La seconde cellule de White est composée de deux miroirs, de rayons de courbure différents, mais satisfaisant la condition de White qui est que les rayons de courbure des deux miroirs sont égaux à leurs distances respectives au dispositif de séparation des faisceaux. Les inconvénients de la cellule de White se retrouvent donc également dans le dispositif décrit dans la publication mentionnée ci-dessus.

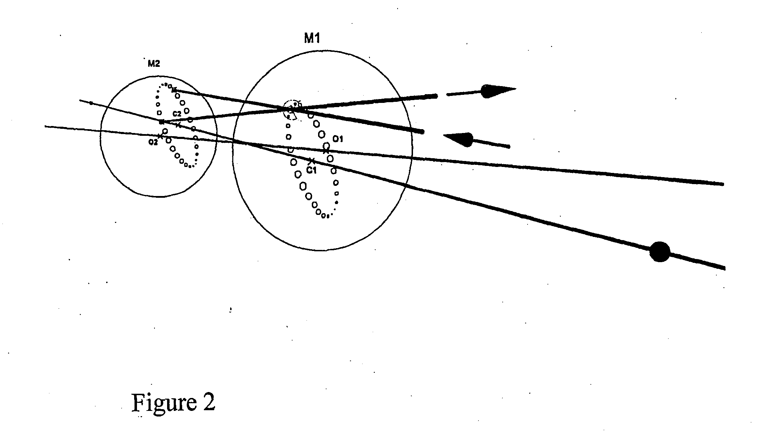

L'art antérieur connaît également depuis les années 1960, les cellules de Herriott composées de deux miroirs en vis-à-vis, un des miroirs étant percé d'un trou pour faire entrer le faisceau lumineux dans la cellule. Comme illustré figure 2, le faisceau pénètre dans la cellule par le trou percé dans M1 et subit des réflexions multiples sur les deux miroirs. Les traces sur les miroirs forment des ellipses.

Pour certaines valeurs de la distance entre les miroirs, le faisceau ressort par le trou percé dans M1. Ces configurations remarquables sont appelées point de fonctionnement. Ainsi, les conditions de fonctionnement d'une cellule de Herriott généralisée à des miroirs de rayons de courbure différents sont obtenues lorsque la distance entre les miroirs est telle qu'il existe deux nombres entiers premiers entre eux K et N tels que :

$$\cos\left(\frac{K\pi}{N}\right) = \sqrt{\left(1 - \frac{d}{R_1}\right)\left(1 - \frac{d}{R_2}\right)}$$

d étant la distance entre les miroirs,
R1 étant le rayon de courbure du miroir M1,
R2 étant le rayon de courbure du miroir M2.

On note que ce dispositif est très stable puisque le point de fonctionnement dépend peu de l'assiette de M1 et pas du tout de l'assiette de M2, les miroirs M1 et M2 peuvent donc bouger légèrement ou même vibrer sans que la sortie du faisceau ne soit affectée. Il est par ailleurs simple à mettre en oeuvre puisqu'il ne comporte que deux miroirs.

Cependant, encore une fois, l'ensemble de la surface des miroirs n'est pas utilisée, et cette configuration ne permet pas un grand nombre d'aller-retour entre les miroirs.

De façon plus générale, il est connu que dans un dispositif à réflexions multiples comprenant deux miroirs en vis-à-vis de rayons de courbure R1 et R2 et situés à une distance d l'un de l'autre, la condition de stabilité permettant aux faisceaux lumineux d'être maintenu dans la cellule s'écrit :

$$0 < \left(1 - \frac{d}{R_1}\right)\left(1 - \frac{d}{R_2}\right) < 1$$

Cette condition bien connue est par exemple décrite dans la publication « Laser Beams and Resonators » de Hogelnik et Li, dans Applied Optics, Volume 5, Numéro 10, Octobre 1966.

La présente invention entend donc proposer un système optique à réflexion multiple stable permettant d'augmenter le nombre d'aller-retour entre les miroirs de la cellule afin d'augmenter le trajet optique du faisceau lumineux, tout en gardant une stabilité optomécanique satisfaisante.

Pour ce faire, la présente invention se rapporte à un système optique à réflexions multiples comprenant un moyen d'entrée E d'un faisceau lumineux et un moyen de sortie S, un premier miroir M1 ayant un rayon de courbure R1, en vis-à-vis et à une distance d2 d'un second miroir M2 ayant un second rayon de courbure R2, et en vis-à-vis et à une distance d3 d'un troisième miroir M3 ayant un troisième rayon de courbure R3, le premier miroir M1 et le second miroir M2 étant agencés de sorte que $0 < \left(1 - \frac{d_2}{R_1}\right)\left(1 - \frac{d_2}{R_2}\right) < 1$ et le premier miroir M1 et le troisième miroir M3, étant agencés de sorte que $0 < \left(1 - \frac{d_3}{R_1}\right)\left(1 - \frac{d_3}{R_3}\right) < 1$ , le premier miroir M1 et le second miroir

M2 formant une première cellule optique ayant un premier axe optique, le premier miroir M1 et le troisième miroir M3 formant une seconde cellule optique ayant un second axe optique, lesdits premier et second axes optiques étant distincts, les rayons de courbures R1, R2, R3 et les distances d2 et d3 n'étant pas simultanément égaux, lesdites premières et secondes cellules optiques étant agencés de sorte à ce que le faisceau lumineux soit contenu dans le système optique entre les moyens d'entrée et les moyens de sortie.

Il est entendu que si les miroirs M2 et/ou M3 sont plans et que le miroir M1 est sphérique, les axes optiques sont définis par la droite passant par le centre de courbure de M1 et normale au plan de M2 et/ou M3.

Dans le cas d'une cellule formée par des miroirs sphériques, cet axe optique est la droite passant par les centres de courbures des deux miroirs de la cellule.

Selon un mode de réalisation particulier, les premier et second miroirs M2 et M3 sont situés à égale distance d du premier miroir M1, et leurs rayons de courbures R2 et R3 sont sensiblement égaux à un rayon commun R. Les deux cellules définies d'une part par le premier miroir M1 et par le second miroir M2, et d'autre part par le premier miroir M1 et par le troisième miroir M3 sont alors agencées de sorte à vérifier les conditions de fonctionnement de Herriott qui s'écrivent pour chaque cellule : il existe deux nombres entiers premiers entre eux K et N tels que

$$\cos\left(\frac{K\pi}{N}\right) = \sqrt{\left(1 - \frac{d}{R_1}\right)\left(1 - \frac{d}{R}\right)} \, .$$

Cette configuration confère au système une grande stabilité optomécanique comme dans le cas d'une cellule de Herriot simple.

Les second et troisième miroirs selon l'invention définissent en fait deux cellules de Herriot. En effet, la rotation d'un des deux miroirs entraîne le déplacement de son centre de courbure, ce qui multiplie les réflexions par rapport à une cellule de Herriott connue. Nous montrerons par la suite que l'inclinaison d'un miroir par rapport à l'autre entraîne un déplacement du point de sortie du faisceau qui, au lieu de sortir de la cellule comme dans une cellule de Herriott, recircule dans la cellule, ce qui augmente donc le nombre d'aller-retour du faisceau.

Par rapport à une cellule de White, le système selon l'invention possède en outre l'avantage de ne pas nécessiter l'égalité des rayons de courbures des miroirs à la distance entre les deux extrémités de la cellule. Le point de fonctionnement est donc atteint même en dehors d'un système confocal.

De préférence, afin de pouvoir faire varier le nombre de réflexions au sein de la cellule, ladite inclinaison est variable et le système optique comprend en outre un moyen de rotation d'au moins un desdits second et troisième miroirs par rapport à l'autre.

Selon un premier mode de réalisation particulièrement simple, le système est composé d'un premier miroir sous la forme d'un miroir sphérique, et les second et troisième miroirs sont des miroirs plans inclinés l'un par rapport à l'autre.

Selon un autre mode de réalisation, le système est composé d'un premier miroir sous la forme d'un miroir sphérique, et les second et troisième miroirs correspondent respectivement à la partie inférieure et à la partie supérieure d'un même miroir sphérique coupé, l'une des deux parties inférieure ou supérieure étant inclinées l'une par rapport à l'autre.

De préférence, le deuxième miroir M2 et le troisième miroir M3 possèdent chacun un bord rectiligne et sont rassemblés par lesdits bords et sans se toucher, lesdits bords étant sensiblement parallèles à la ligne passant par l'intersection des deux axes optiques avec le second miroir M2 et le troisième miroir M3. On positionne également avantageusement le moyen d'entrée E du faisceau lumineux de sorte à générer une ligne de points de réflexion sensiblement focalisés le long du bord d'au moins un desdits second M2 et troisième miroirs M3.

De la sorte, on tire partie de la stabilité optomécanique du système, en particulier pour les manipulations embarquées. Les points de focalisation étant liés au point d'entrée, on s'assure en effet qu'ils sont maintenus sur le bord de l'un des miroirs.

On comprendra mieux l'invention à l'aide de la description, faite ci-après à titre purement explicatif, d'un mode de réalisation de l'invention, en référence aux figures annexées :

- la figure 1 représente une cellule de White connue de l'art antérieur;
- la figure 2 représente une cellule de Herriott connue de l'art antérieur
- la figure 3 représente un exemple de cellule à réflexion multiple selon l'invention;
- les figures 4A et 4B représentent un exemple de trajet des réflexions lumineuses dans une cellule selon l'invention ;
- les figures 5 et 6 représentent un exemple de mode de réalisation des miroirs inclinables dans une cellule selon l'invention.

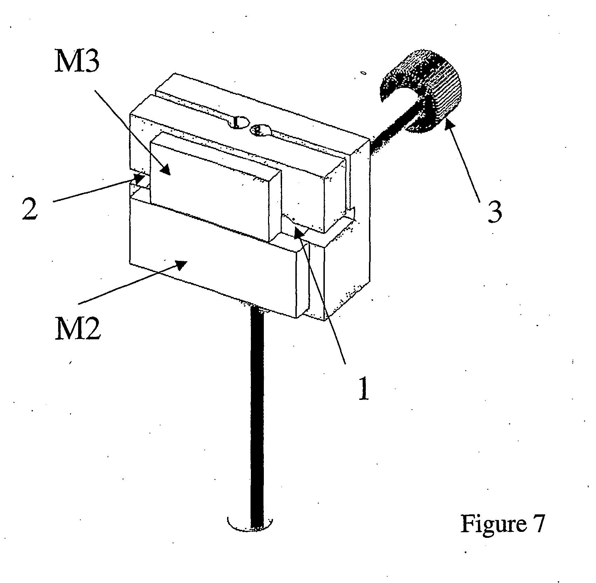

- la figure 7 représente un exemple de dispositif pour incliner les miroirs selon l'invention.

On rappelle d'abord le fonctionnement d'une cellule connue de type Herriott telle qu'illustrée figure 2.

Illustré figure 2, le faisceau pénètre dans la cellule par le trou percé dans M1. Le faisceau subit des réflexions multiples sur les deux miroirs. Les traces sur les miroirs forment des ellipses.

Pour certaines valeurs de la distance entre les miroirs, le faisceau ressort par le trou percé dans M1. Ces configurations remarquables sont appelées points de fonctionnement. De façon générale, lorsque les rayons de courbures sont distincts, elles sont obtenues lorsque la distance entre les miroirs est telle qu'il existe deux nombres entiers K et N premiers entre eux (pas de diviseur commun autre que 1) avec :

$$\cos(K\pi/N) = \sqrt{g_1 g_2} \quad \text{et} \quad g_1 = 1 - \frac{d}{R_1} \quad \text{et} \quad g_2 = 1 - \frac{d}{R_2}$$

N est le nombre d'allers-retours effectués par le faisceau dans la cellule. C'est aussi le nombre de réflexion sur un des miroirs.

K est le nombre de tours effectués par le faisceau autour de l'axe optique.

d étant la distance entre les miroirs,

R1 étant le rayon de courbure du miroir M1,

R2 étant le rayon de courbure du miroir M2.

Dans le cas ou les miroirs en vis-à-vis ont des rayons de courbure identique alors

$$g1 = g2 = 1 - d/R$$

$$g1/g2 = 1$$

Les points de fonctionnement sont obtenus lorsque :

$$d = R(1 - \cos\theta) \quad \textbf{avec} \quad \theta = K\pi / N \qquad \theta \in \left]0, \pi\right[$$

Ceci a différentes conséquences décrites ci-dessous :

Les traces des réflexions sur les deux miroirs forment des ellipses homothétiques dans le rapport $\sqrt{\dfrac{g_1}{g_2}}$.

Ces ellipses sont centrées sur l'axe optique du système qui est la droite passant par les centres de courbure des deux miroirs.
Le diamètre de ces taches de réflexions suit une évolution sinusoïdale lorsque l'on parcourt l'ellipse. Le diamètre de ces taches sur les deux miroirs sont dans le même rapport $\sqrt{\dfrac{g_1}{g_2}}$.

Il ressort de cette évolution que, sur chaque miroir, deux taches de réflexions symétriques par rapport à l'axe optique ont le même diamètre.
La surface réglée engendrée par les faisceaux est un hyperboloïde.
L'ensemble de la cellule est équivalente à un miroir sphérique divergent dont la surface coïncide avec celle de M1 (le faisceau ressort de la cellule comme si le faisceau entrant se réfléchissait sur la surface de M1)
On note par ailleurs que lorsque le point d'entrée est un point de focalisation, le point de sortie l'est aussi.
Ceci a pour conséquence que le faisceau émergent est indépendant de l'orientation de M2 : les ellipses se déforment, mais le faisceau de sortie reste immobile.
Comme dans un Fabry-Perot confocal, les aberrations du système sont du quatrième ordre. La différence de chemin optique entre un faisceau parcourant le système sur l'axe optique et un faisceau hors axe est donnée par :

$$L - 2Nd \approx \frac{Nr^4}{dR^2}$$

où L est le parcours optique total et r le grand axe de l'ellipse des traces de réflexions (cas ou R1=R2).
Dans le cas ou les réflexions sont situées sur des cercles, θ et K ont des interprétations géométriques simples :

- les points de réflexion sont régulièrement espacés sur le cercle,
- deux réflexions successives sont séparées par K intervalles (K-1 taches de réflexions),
- l'angle entre deux réflexions successives vaut 2θ,
- K est le nombre de tours effectués par les réflexions autour de l'axe optique.

Lorsque le faisceau entrant est un faisceau parallèle le diamètre des taches varie d'une valeur minimale qui peut être zéro à une valeur maximale qui est voisine de 1/cos(θ/2) fois le diamètre du faisceau entrant.
Par ailleurs, lorsque la distance entre les miroirs (ou le rayon de courbure) change, l'ensemble des traces de réflexions glissent sur l'ellipse proportionnellement à leur indice de réflexion. Le point de sortie est donc celui qui bouge le plus. Il se déplace tangentiellement à l'ellipse des réflexions.
Par la suite nous ne considérerons que le cas ou les miroirs ont un rayon de courbure identique pour simplifier le formalisme et le raisonnement en retenant que cette cellule fonctionne de manière identique avec des rayons de courbure différents.
Toujours pour simplifier l'explication considérons une cellule de Herriott où les réflexions sont situées sur un cercle avec comme points de fonctionnement les cas ou K=1.
Compte tenu des propriétés de la cellule de Herriott, chaque réflexion est contiguë de la précédente et de la suivante. Les N/2 premières réflexions sont situées sur la même moitié du miroir. Sur la figure 2, soit M1 le miroir par lequel entrent et sortent les faisceaux, M2 l'autre miroir.

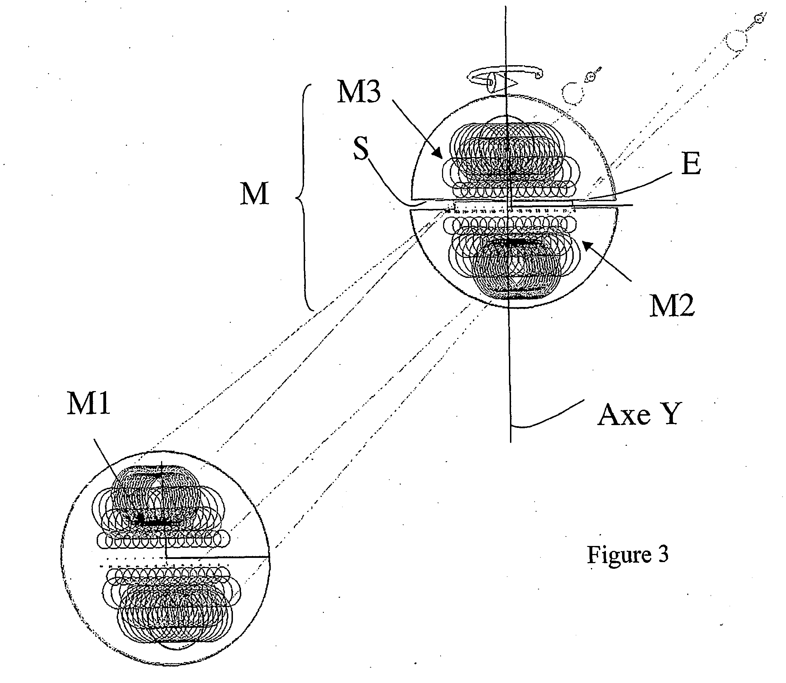

En coupant le miroir juste au-dessus du point d'injection, et en faisant pivoter l'une des moitiés que nous appellerons M3 comme sur la figure 3, une deuxième cellule de Herriott est créée. En effet, la rotation de ce miroir entraîne le déplacement de son centre de courbure. Un nouvel axe optique est créé qui passe par le centre de courbure de M3 et M1.

Soit X l'axe qui sépare les deux miroirs, Y l'axe perpendiculaire et Z l'axe qui passe par le centre des miroirs M2 et M1, si l'on fait tourner M3 autour de l'axe Y, alors son centre de courbure se déplace dans un plan perpendiculaire à l'axe Y (plan XOZ) et, par conséquent l'intersection du nouvel axe optique avec M3 se déplace sur l'axe X.

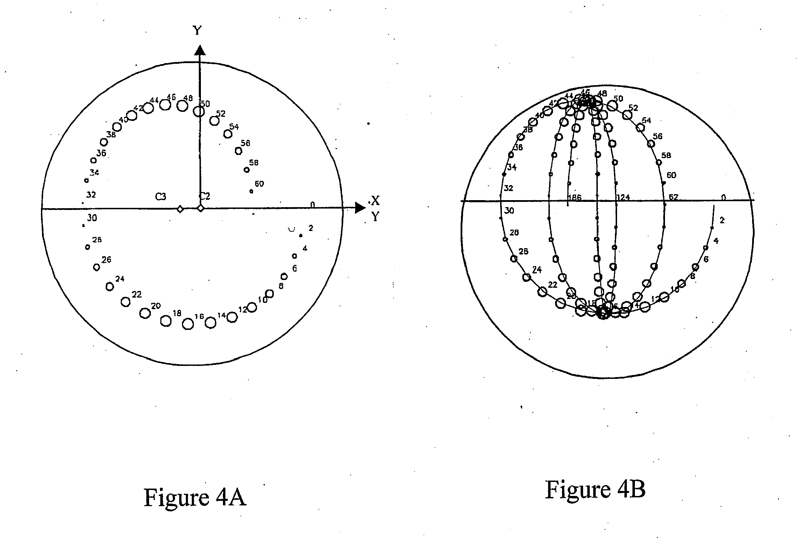

Illustré figure 4, on étudie maintenant les conséquences de cette configuration sur les réflexions. La première moitié des réflexions reste inchangée : elles se trouvent toujours sur une moitié d'ellipse qui est symétrique par rapport à l'intersection (C2) de l'axe optique de la première cellule avec M2.

Lorsque le faisceau arrive pour la première fois sur M3, il entre dans une nouvelle cellule. Cette première réflexion sert de point d'entrée pour la nouvelle cellule.

La deuxième moitié des réflexions utilise alors la nouvelle cellule et génère donc une deuxième moitié d'ellipse symétrique par rapport à l'intersection (C3) de l'axe optique de la deuxième cellule avec M3.

Ceci est illustré figures 4A et 4B pour un miroir découpé de Herriott avec K=1 et N=31.

Le miroir M est coupé en deux sur l'axe des X.

La moitié supérieure est inclinée (rotation autour de l'axe des Y).

Le nouvel axe optique passe par C3 et les réflexions suivantes sont sur une ellipse symétrique par rapport à ce nouvel axe.

Dans le cadre d'une modélisation d'une cellule de Herriott dans l'approximation de Gauss lorsque les réflexions sont situées sur un cercle, la position de la $i^{ème}$ réflexion sur l'axe Y est donnée par : $y_i = -x_0 \sin(i\theta)$.

Dans notre cas, en projection sur le plan YoZ, il n'y a pas de modification des paramètres pour la nouvelle cellule. Les équations projetées sur les plans XoZ et YoZ qui décrivent l'évolution du rayon étant indépendantes, la position sur Y des points de réflexions reste inchangée.

Il s'en suit donc que la dimension suivant Y de la nouvelle demi ellipse est indépendante de la rotation de M3 et est donc la même que pour une rotation nulle.

De même l'on peut déduire que si le point d'entrée est un point de focalisation, le point de sortie dans une cellule de Herriott classique en est un également. Pour la nouvelle cellule, comme il y a toujours focalisation en projection sur l'axe Y, il en est forcément de même pour l'axe des X : si le point d'entrée est conjugué du point de sortie sur un axe, il doit l'être sur l'autre également.

Finalement, le résultat de l'inclinaison demi-miroir M1' conduit à déplacer le point de sortie uniquement sur l'axe des X de deux fois la distance séparant les intersections des axes optiques des deux cellules de Herriot avec M2 et M3.

Après avoir effectué sa deuxième moitié de réflexion le faisceau retombe focalisé sur le premier miroir de la première cellule, le faisceau continue donc à parcourir la cellule. Les ellipses sont de plus en plus resserrées jusqu'à ce que l'une d'entre elles passe entre les deux centres optiques. Le sens de rotation des ellipses s'inverse alors (Figure 4A)

À ce point, il est possible soit de laisser les réflexions continuer jusqu'à ce que l'un des points de refocalisation sorte du premier demi-cercle des réflexions, soit modifier l'angle d'injection ou l'inclinaison du miroir M1.

Il est alors aisé d'injecter le faisceau dans la cellule par un trou situé sur l'un des côtés du demi-miroir inférieur et de récupérer le faisceau en sortie par un trou diamétralement opposé. Une fois dans cette configuration, le réglage d'inclinaison du demi-miroir contrôle le coefficient multiplicateur du nombre de réflexion de la cellule de Herriott initial obtenu pour une inclinaison nulle. Il est remarquable de constater, qu'une fois la position du trou de sortie fixée, le faisceau sortant conserve toujours la même direction quel que soit le coefficient multiplicateur choisi.

En considérant que K est le nombre de tours effectués par les réflexions autour du centre optique, il est aisé de voir qu'au cours des N réflexions, le faisceau passe K fois de la partie inférieure de M à sa partie supérieure. Les ellipses sont donc K fois modifiées au cours du premier parcours. En première approximation, le point de sortie est donc décalé de 2K fois la distance entre C2 et C3. Une modélisation rigoureuse aisément réalisable par l'homme du métier montre que cela n'est pas parfaitement exact mais d'autant plus vrai que N est grand. Il est cependant de peu d'importance de connaître l'expression exacte, l'important est qu'ici encore le réglage demi-miroir induit un déplacement du point de sortie permettant sa recirculation dans la cellule.

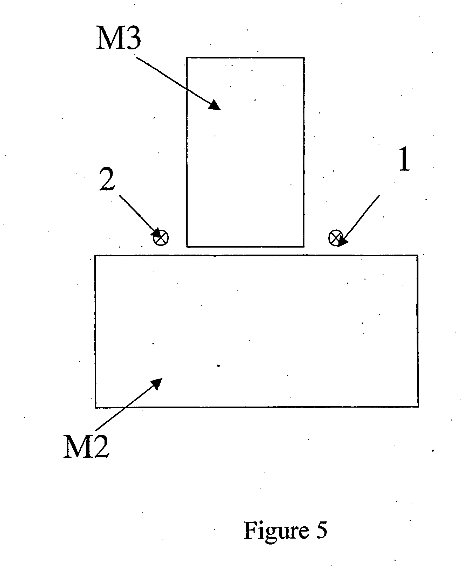

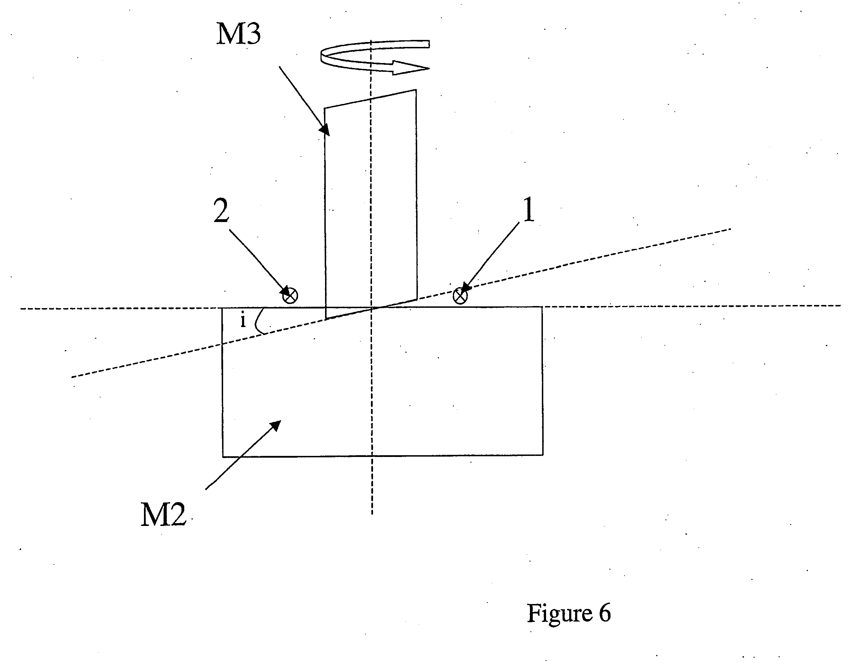

Illustré figures 5 et 6, on décrit maintenant un mode de réalisation utilisant deux miroirs plans, et un miroir sphérique.

Les deux miroirs plans forment le couple M2 et M3. Ils sont positionnés initialement comme illustré figure 5, l'un au dessus de l'autre, avec un léger espace entre eux. Les points d'entrée 1 et de sortie 2 sont positionnés de sorte à ce qu'une partie du miroir M'1 soit située entre eux. De la sorte, les points de réflexions sont maintenus dans la cellule.

La fixation de ces deux miroirs est réalisée grâce à une pièce mécanique flexible qui permet le réglage de M3 par rapport M2 suivant un axe de rotation unique tout en assurant une très grande rigidité en dehors de cette rotation.

Cette pièce est percée de deux trous permettant l'entrée et la sortie du faisceau de la cellule. Une vis de réglage 3 et une butée à ressort permettent le contrôle de M3. Les deux miroirs sont collés directement sur cette pièce. M1 sur la partie fixe et M3 sur la partie mobile. Pour assurer l'orientation correcte des deux miroirs, ceux-ci sont d'abord posés sur leur surface réfléchissante sur une surface plane de référence (plaque de verre). La pièce mécanique, préalablement encollée, est posée sur le dos des miroirs.

Nous avons ici décrit des modes de réalisation dans lesquels les rayons de courbures des deux miroirs M2 et M3 sont identiques et sont situés à égale distance du premier miroir M1. L'homme du métier comprend que l'invention n'est pas limitée à ce mode de réalisation et fonctionne également lorsque les miroirs ont des rayons de courbures différents et ne sont pas à égale distance du premier miroir M1. De façon générale, pour un miroir M2 de rayon de courbure R2 situé à une distance d2 du miroir M1 et un troisième miroir M3 de rayon de courbure R3 situé à une distance d3 du miroir M1, il est également possible de vérifier les conditions de stabilité pour les deux cellules formées selon l'invention.

Ceci est obtenu lorsque le premier M1 et le second miroirs M2 sont tels que

$$0 < \left(1 - \frac{d_2}{R_1}\right)\left(1 - \frac{d_2}{R_2}\right) < 1 \, ,$$

et
le premier miroir M1 et le troisième miroir M3, sont agencés de sorte que

$$0 < \left(1 - \frac{d_3}{R_1}\right)\left(1 - \frac{d_3}{R_3}\right) < 1$$

Lorsque les deux cellules formées sont à égale distance d du miroir M1 et que les rayons de courbures R2 et R3 sont égaux à un rayon R, ces deux conditions sont équivalentes. Il existe alors des configurations remarquables qui confèrent au système une grande, stabilité optomécanique lorsqu'il existe deux nombres entiers premiers entre eux K et N tels que :

$$\cos\left(\frac{K\pi}{N}\right) = \sqrt{\left(1 - \frac{d}{R_1}\right)\left(1 - \frac{d}{R}\right)} \, .$$

**Revendications**

1. Système optique à réflexions multiples comprenant un moyen d'entrée (E) d'un faisceau lumineux et un moyen de sortie (S), un premier miroir (M1) ayant un rayon de courbure R1, en vis-à-vis et à une distance d2 d'un second miroir (M2) ayant un second rayon de courbure R2, et en vis-à-vis et à une distance d3 d'un troisième miroir (M3) ayant un troisième rayon de courbure R3, le premier miroir (M1) et le second miroir (M2) étant agencés de sorte

que $0 < \left(1 - \frac{d_2}{R_1}\right)\left(1 - \frac{d_2}{R_2}\right) < 1$ et le premier miroir (M1) et le troisième miroir (M3), étant agencés de

sorte que $0 < \left(1 - \frac{d_3}{R_1}\right)\left(1 - \frac{d_3}{R_3}\right) < 1$ , le premier miroir (M1) et le second miroir (M2) formant une première cellule optique ayant un premier axe optique, le premier miroir (M1) et le troisième miroir (M3) formant une seconde cellule optique ayant un second axe optique, lesdits premier et second axes optiques étant distincts, les rayons de courbures R1, R2, R3 et les distances d2 et d3 n'étant pas simultanément égaux, lesdites premières et secondes cellules optiques étant agencés de sorte à ce que le faisceau lumineux soit contenu dans le système optique entre les moyens d'entrée et les moyens de sortie.

2. Système optique selon la revendication 1, **caractérisé en ce qu'**il comprend en outre un moyen pour faire varier les directions desdits premiers et second axes optiques.

3. Système optique à réflexions multiples selon la revendication 1, **caractérisé en ce que** lesdits second (M2) et troisième miroirs (M3) sont des miroirs plans inclinés l'un par rapport à l'autre, et **en ce que** le premier miroir (M1) est un miroir sphérique.

4. Système optique à réflexions multiples selon la revendication 1, **caractérisé en ce que** lesdits second (M2) et troisième miroir (M3) sont des miroirs sphériques inclinés l'un par rapport à l'autre.

5. Système optique selon la revendication 4, **caractérisé en ce que** les deux rayons de courbure R2 et R3 sont sensiblement égaux.

6. Système optique à réflexions multiples selon la revendication 5, **caractérisé en ce que** les second (M2) et troisième miroirs (M3) correspondent à la partie inférieure et à la partie supérieure d'un même miroir sphérique coupé.

7. Système optique selon la revendication 1 ou 5, **caractérisé en ce que** les distances d2 et d3 sont sensiblement égales à une distance d, et **en ce que** les rayons de courbure R2 et R3 sont sensiblement égaux à un rayon R, les premier, second et troisième miroirs étant en outre agencés de sorte à ce qu'il existe deux nombres entiers premiers entre eux K et N tels que :

$$\cos(\frac{K\pi}{N}) = \sqrt{(1-\frac{d}{R_1})(1-\frac{d}{R})} \quad.$$

8. Système optique selon la revendication 1, **caractérisé en ce que** le deuxième miroir (M2) et le troisième miroir (M3) possèdent chacun un bord rectiligne et sont rassemblés par lesdits bords et sans se toucher, lesdits bords étant sensiblement parallèles à la ligne passant par l'intersection des deux axes optiques avec le second miroir (M2) et le troisième miroir (M3).

9. Système optique selon la revendication 8 **caractérisé en ce que** le moyen d'entrée (E) du faisceau lumineux est positionné de sorte à générer une ligne de points de réflexion sensiblement focalisés le long du bord d'au moins un desdits second (M2) et troisième miroirs (M3).

**Claims**

1. A multiple reflection optical system comprising light beam inlet means (E) and outlet means (S), a first mirror (M1) having a radius of curvature R1, opposite and at a distance d2 from a second mirror (M2) having a second radius of curvature R2, and opposite and at a distance d3 from a third mirror (M3) having a third radius of curvature R3, the first mirror (M1) and the second mirror (M2) being so arranged that $0 < \left(1-\frac{d_2}{R_1}\right)\left(1-\frac{d_2}{R_2}\right) < 1$ and the first mirror (M1) and the third mirror (M3), being so arranged that $0 < \left(1-\frac{d_3}{R_1}\right)\left(1-\frac{d_3}{R_3}\right) < 1$ the first mirror (M1) and the second mirror (M2) forming a first optical cell having a first optical axis, the first mirror (M1) and the third mirror (M3) forming a second optical cell having a second optical axis, said first and second optical axes being distinct, the radii of curvature R1, R2, R3 and the distances d2 and d3 not being simultaneously equal, said first and second optical cells being so arranged that the light beam is contained in the optical system between the inlet means and the outlet means.

**2.** An optical system according to claim 1, **characterized in that** it further comprises means for varying the directions of said first and second optical axes.

**3.** A multiple reflection optical system according to claim 1, **characterised in that** said second (M2) and third (M3) mirrors are plane mirrors inclined with respect to each other, and **in that** the first mirror (M1) is a spherical mirror.

**4.** A multiple reflection optical system according to claim 1, **characterized in that** said second (M2) and third (M3) mirrors are spherical mirrors inclined with respect to each other.

**5.** An optical system according to claim 4, **characterized in that** the two radii of curvature R2 and R3 are substantially equal.

**6.** A multiple reflection optical system according to claim 5, **characterized in that** the second (M2) and third (M3) mirrors correspond to the lower part and to the upper part of the same cut spherical mirror.

**7.** An optical system according to claim 1 or 5, **characterized in that** the distances d2 and d3 are substantially equal to a distance d, and **in that** the radii of curvature R2 and R3 are substantially equal to a radius R, the first, second and third mirrors being further so arranged that two prime integral numbers K and N exist such that:

$$\cos(\frac{K\pi}{N}) = \sqrt{(1 - \frac{d}{R_1})(1 - \frac{d}{R})} \bullet$$

**8.** An optical system according to claim 1, **characterized in that** the second mirror (M2) and the third mirror (M3) each have a rectilinear edge and are assembled by said edges and without contact, said edges being substantially parallel to the line going through the intersection of both optical axes with the second mirror (M2) and the third mirror (M3).

**9.** An optical system according to claim 8, **characterized in that** the light beam inlet means (E) is positioned so as to generate a line of reflection points substantially focused along the edge of at least one of said second (M2) and third (M3) mirrors.

**Patentansprüche**

**1.** Optik mit Mehrfachreflexionen, die ein Mittel für den Eintritt (E) eines Lichtbündels und ein Ausgangsmittel (S) umfaßt, einen ersten Spiegel (M1) mit einem Krümmungsradius R1 gegenüber und in einer Entfernung d2 von einem zweiten Spiegel (M2) mit einem zweiten Krümmungsradius R2 und gegenüber und in einer Entfernung d3 von einem dritten Spiegel (M3) mit einem dritten Krümmungsradius R3, wobei der erste Spiegel (M1) und der zweite Spiegel (M2) so gestaltet sind, daß $0 < \left(1 - \frac{d_2}{R_1}\right)\left(1 - \frac{d_2}{R_2}\right) < 1$ und der erste Spiegel (M1) und der dritte Spiegel (M3) so gestaltet sind, daß $0 < \left(1 - \frac{d_3}{R_1}\right)\left(1 - \frac{d_3}{R_3}\right) < 1$ wobei der erste Spiegel (M1) und der zweite Spiegel (M2) eine erste optische Zelle mit einer ersten optischen Achse bilden, wobei der erste Spiegel (M1) und der dritte Spiegel (M3) eine zweite optische Zelle mit einer zweiten optischen Achse bilden, wobei die besagte erste und zweite optische Achse getrennt sind, die Krümmungsradien R1, R2, R3 und die Entfernungen d2 und d3 nicht gleichzeitig gleich sind, die besagte erste und zweite optische Zelle so gestaltet sind, daß das Lichtbündel in der Optik zwischen dem Eingangsmittel und den Ausgangsmittel enthalten ist.

**2.** Optik nach Anspruch 1, **dadurch gekennzeichnet, daß** es außerdem ein Mittel umfaßt, mit dem die Richtungen der besagten ersten und zweiten optischen Achse variieren können.

**3.** Optik mit Mehrfachreflexionen nach Anspruch 1, **dadurch gekennzeichnet, daß** der besagte zweite (M2) und der dritte (M3) Spiegel ebene untereinander geneigte Spiegel sind, und dadurch, daß der erste Spiegel (M1) ein kugelförmiger Spiegel ist.

4. Optik mit Mehrfachreflexionen nach Anspruch 1, **dadurch gekennzeichnet, daß** der besagte zweite (M2) und der dritte (M3) Spiegel kugelförmige untereinander geneigte Spiegel sind.

5. Optik nach Anspruch 4, **dadurch gekennzeichnet, daß** die beiden Krümmungsradien R2 und R3 deutlich gleich sind.

6. Optik mit Mehrfachreflexionen nach Anspruch 5, **dadurch gekennzeichnet, daß** der zweite (M2) und der dritte (M3) Spiegel dem unteren Teil und dem oberen Teil eines gleichen kugelförmigen geschnittenen Spiegels entsprechen.

7. Optik nach Anspruch 1 oder 5, **dadurch gekennzeichnet, daß** die Entfernungen d2 und d3 deutlich gleich einer Entfernung d sind, und dadurch, daß die Krümmungsradien R2 und R3 deutlich gleich einem Radius R sind, wobei der erste, zweite und dritte Spiegel außerdem so gestaltet sind, daß zwei ganze Primärzahlen K und N zwischen ihnen vorhanden, so daß:

$$\cos(\frac{K\pi}{N}) = \sqrt{((1-\frac{d}{R_1})(1-\frac{d}{R})}$$

8. Optik nach Anspruch 1, **dadurch gekennzeichnet, daß** der zweite Spiegel (M2) und der dritte (M3) Spiegel jeweils eine gradlinige Kante besitzen und an den besagten Kanten verbunden sind, und wobei die besagten Kanten ohne sich zu berühren deutlich parallel zur Linie sind, die durch die Schnittstelle der beiden optischen Achsen mit dem zweiten Spiegel (M2) und dem dritten Spiegel (M3) verläuft.

9. Optik nach Anspruch 8, **dadurch gekennzeichnet, daß** das Mittel für den Eintritt (E) des Lichtbündels so positioniert ist, daß eine Linie mit Reflexionspunkten erzeugt wird, die deutlich entlang der Kante mindestens eines besagten zweiten (M2) und dritten (M3) Spiegels fokalisiert ist.

Figure 1

Figure 2

Figure 3

Figure 4B

Figure 4A

Figure 5

Figure 6

Figure 7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

• **HOGELNIK ; LI.** Laser Beams and Resonators. *Applied Optics,* Octobre 1966, vol. 5 (10